# EUROPÄISCHE PATENTANMELDUNG

(11) **EP 2 902 771 A1**
(43) Veröffentlichungstag der Anmeldung: **05.08.2015**
(21) Anmeldenummer: 15153630.7
(22) Anmeldetag: 03.02.2015
(51) Int. Cl.: G01N 21/3586, G01N 22/00

(54) **Verfahren zur Spektrometrie und Spektrometer**

(30) Priorität: 03.02.2014 DE 102014101302
(71) Anmelder: Hübner GmbH & Co. KG, 34123 Kassel (DE)
(72) Erfinder: Molter, Daniel, 67663 Kaiserslautern (DE); Ellrich, Frank, 55546 Fürfeld (DE); Hübsch, Daniel, 34119 Kassel (DE); Sprenger, Thorsten, 34253 Lohfelden (DE)
(74) Vertreter: WSL Patentanwälte Partnerschaft mbB

(57) **Zusammenfassung**

Verfahren zur Spektrometrie an einer räumlich ausgedehnten Probe mit Generieren eines Maßes für eine Übereinstimmung eines erfassten Spektrums einer ersten Generation mit einem oder einer Mehrzahl von vorbestimmten Vergleichsspektren chemischer Substanzen, das die Schritte umfasst: Bestimmen mindestens eines Orts der ersten Generation auf der Probe, Bestrahlen der Probe mit elektromagnetischer Strahlung mit einer Mehrzahl von Frequenzen oder einem Frequenzband aus einem Frequenzbereich von 1 GHz bis 30 THz an dem bestimmten Ort der ersten Generation auf der Probe, frequenzaufgelöstes Erfassen eines Maßes für die Intensität der an dem Ort der ersten Generation auf die Probe gestrahlten und durch die Probe transmittierten oder von der Probe reflektierten elektromagnetischen Strahlung als Spektrum der ersten Generation und Berechnen jeweils eines Maßes für eine Übereinstimmung des erfassten Spektrums der ersten Generation mit einem der Vergleichsspektren. Um ein entsprechendes Verfahren zur Spektrometrie an einer räumlich ausgedehnten Probe, aber auch ein dafür geeignetes Spektrometer bereitzustellen, welche die Generierung zuverlässiger Messergebnisse ermöglichen, wird erfindungsgemäß vorgeschlagen, dass wenn das berechnete Maß für die Übereinstimmung des erfassten Spektrums der ersten Generation mit einem der Vergleichsspektren in einem vorgegebenen Bereich liegt, durch Ausführen der folgenden Schritte ein Maß für eine Übereinstimmung mindestens eines erfassten Spektrums einer zweiten Generation mit jedem der Vergleichsspektren generiert wird: Bestimmen einer vorgegebenen Anzahl von Orten der zweiten Generation, so dass alle Orte der zweiten Generation auf der Probe voneinander und von dem Ort der ersten Generation verschieden sind und alle Orte der zweiten Generation auf der Probe in einem vorgegebenen Bereich um den Ort der ersten Generation herum angeordnet sind, Bestrahlen der Probe mit elektromagnetischer Strahlung mit der Mehrzahl von Frequenzen oder dem Frequenzband aus einem Frequenzbereich von 1 GHz bis 30 THz an den Orten der zweiten Generation auf der Probe, frequenzaufgelöstes Erfassen jeweils eines Maßes für die Intensität der an den Orten der zweiten Generation auf die Probe gestrahlten und durch die Probe transmittierten oder von der Probe reflektierten elektromagnetischen Strahlung als Spektren der zweiten Generation und Berechnen jeweils eines Maßes für eine Übereinstimmung eines jeden Spektrums der zweiten Generation mit jedem der Vergleichsspektren.

## Beschreibung

Die vorliegende Erfindung betrifft ein Verfahren zur Spektrometrie an einer räumlich ausgedehnten Probe mit Generieren eines Maßes für eine Übereinstimmung eines erfassten Spektrums einer ersten Generation mit einem oder einer Mehrzahl von vorbestimmten Vergleichsspektren chemischer Substanzen, das die Schritte umfasst: Bestimmen mindestens eines Orts der ersten Generation auf der Probe, Bestrahlen der Probe mit elektromagnetischer Strahlung mit einer Mehrzahl von Frequenzen oder einem Frequenzband aus einem Frequenzbereich von 1 GHz bis 30 THz an dem bestimmten Ort der ersten Generation, frequenzaufgelöstes Erfassen eines Maßes für die Intensität der an dem Ort der ersten Generation auf die Probe gestrahlten und durch die Probe transmittierten oder von der Probe reflektierten elektromagnetischen Strahlung als Spektrum der ersten Generation und Berechnen jeweils eines Maßes für eine Übereinstimmung des erfassten Spektrums der ersten Generation mit jedem der Vergleichsspektren.

Die vorliegende Erfindung betrifft zudem ein Spektrometer, welches so eingerichtet und ausgestaltet ist, dass es ein solches Verfahren ausführen kann.

In einem Frequenzbereich elektromagnetischer Strahlung zwischen 1 GHz und 30 THz, auch als Terahertz-Frequenzbereich oder ferninfraroter Frequenz- oder Spektralbereich bezeichnet, sind viele Materialien, wie zum Beispiel Papier, Pappe, Keramik und eine Reihe von Kunststoffen, transparent und können durchleuchtet werden. Daraus ergeben sich potenzielle Anwendungen insbesondere für bildgebende Systeme in der Qualitäts-, Verpackungs- und Sicherheitskontrolle sowie für die Überwachung chemischer Reaktionen.

Dabei entspricht die Frequenz von 1 THz einer Wellenlänge der elektromagnetischen Welle von 300 µm und einer Photonenenergie von 4,14 meV bzw. von 33 Wellenzahlen. Die Strahlung ist mithin nicht ionisierend und trifft, anders als beispielsweise Röntgenstrahlung, am anderen Ende des elektromagnetischen Spektrums, nicht auf gesundheitliche Vorbehalte.

Systeme, die in dem genannten Frequenzbereich des elektromagnetischen Spektrums arbeiten, werden jedoch nicht nur zum Zwecke der Bildgebung, sondern auch zur Identifizierung von chemischen Substanzen, d.h. zur Spektrometrie, verwendet. Es hat sich nämlich gezeigt, dass bestimmte chemische Substanzen, beispielsweise solche, die wie Kampfmittel, Sprengstoffe oder Drogen sicherheitsrelevant sind, in dem genannten Frequenzbereich charakteristische Absorptionsbanden aufweisen. Gelingt es, ein Spektrum, d.h. ein frequenzaufgelöstes Maß für die Intensität der von einer chemischen Substanz reflektierten oder durch diese transmittierten elektromagnetischen Strahlung, im genannten Frequenzbereich aufzunehmen, so kann dieses Spektrum mit bekannten Referenzspektren, die beispielsweise in einer Datenbank gespeichert sind, verglichen werden und die Substanz lässt sich identifizieren.

Sollen derartige spektrometrische Verfahren und Spektrometer in Anwendungsumgebungen außerhalb des Labors eingesetzt werden, so ist es erforderlich, dass diese schnell arbeiten und auch für Nicht-Fachpersonal bedienbar sind. Zudem stellen außerhalb Labors Effekte aufgrund von Umverpackungen und Maskierungen um die eigentlich zu erkennenden chemischen Substanzen eine Herausforderung dar.

Daher ist es Aufgabe der vorliegenden Erfindung, ein Verfahren zur Spektrometrie an einer räumlich ausgedehnten Probe, aber auch ein dafür geeignetes Spektrometer bereitzustellen, welche die Generierung zuverlässiger Messergebnisse ermöglichen. Zudem ist es eine Aufgabe der vorliegenden Erfindung, ein solches spektrometrisches Verfahren und ein für dieses geeignetes Spektrometer bereitzustellen, die es ermöglichen, an einer räumlich ausgedehnten Probe relevante Informationen in möglichst kurzer Messzeit zu erfassen. Weiterhin ist es Aufgabe der vorliegenden Erfindung, ein spektrometrisches Verfahren sowie ein Spektrometer zum Ausführen dieses Verfahrens bereitzustellen, die für den Benutzer einfach zu bedienen sind und eine einfache Entscheidungsgrundlage, beispielsweise in der Sicherheits- oder Qualitätskontrolle, bereitstellen.

Zumindest eine der zuvor genannten Aufgaben wird gelöst durch ein Verfahren zur Spektrometrie an einer räumlich ausgedehnten Probe mit Generieren eines Maßes für eine Übereinstimmung eines erfassten Spektrums einer ersten Generation mit einem oder einer Mehrzahl von vorbestimmten Vergleichsspektren chemischer Substanzen, das die Schritte umfasst: Bestimmen mindestens eines Orts der ersten Generation auf der Probe, Bestrahlen der Probe mit elektromagnetischer Strahlung mit einer Mehrzahl von Frequenzen oder einem Frequenzband aus einem Frequenzbereich von 1 GHz bis 30 THz an dem bestimmten Ort der ersten Generation auf der Probe, frequenzaufgelöstes Erfassen eines Maßes für die Intensität der an dem Ort der ersten Generation auf die Probe gestrahlten und durch die Probe transmittierten oder von der Probe reflektierten elektromagnetischen Strahlung als Spektrum der ersten Generation und Berechnen jeweils eines Maßes für eine Übereinstimmung des erfassten Spektrums der ersten Generation mit einem der Vergleichsspektren, wobei wenn das berechnete Maß für die Übereinstimmung des erfassten Spektrums der ersten Generation mit einem der Vergleichsspektren in einem vorgegebenen Bereich liegt, durch Ausführen der folgenden Schritte ein Maß für eine Übereinstimmung mindestens eines erfassten Spektrums einer zweiten Generation mit jedem der Vergleichsspektren generiert wird: Bestimmen einer vorgegebenen Anzahl von Orten der zweiten Generation, so dass alle Orte der zweiten Generation auf der Probe voneinander und von dem Ort der ersten Generation verschieden sind und alle Orte der zweiten Generation auf der Probe in einem vorgegebenen Bereich um den Ort der ersten Generation herum angeordnet sind, Bestrahlen der Probe mit elektromagnetischer Strahlung mit der Mehrzahl von Frequenzen oder dem Frequenzband aus einem Frequenzbereich von 1 GHz bis 30 THz an den Orten der zweiten Generation auf der Probe, frequenzaufgelöstes Erfassen jeweils eines Maßes für die Intensität der an den Orten der zweiten Generation auf die Probe gestrahlten und durch die Probe transmittierten oder von der Probe reflektierten elektromagnetischen Strahlung als Spektren der zweiten Generation und Berechnen jeweils eines Maßes für eine Übereinstimmung eines jeden Spektrums der zweiten Generation mit jedem der Vergleichsspektren.

Wird an einem Ort auf einer räumlich ausgedehnten Probe eine spektrometrische Messung im THz-Frequenzbereich durchgeführt, so wird das gemessene bzw. erfasste Spektrum mit einer Anzahl von vorbestimmten Vergleichsspektren, die jedes zu einer chemischen Substanz gehören, verglichen. Dabei kann dieser Vergleich im Wesentlichen drei voneinander zu unterscheidende Ergebnisse produzieren: es liegt keine der durch die vorbestimmten Vergleichsspektren identifizierten chemischen Substanzen vor ("grün"), es ist mit hinreichender Wahrscheinlichkeit an diesem Ort eine durch eines der vorbestimmten Vergleichsspektren identifizierte chemische Substanz vorhanden ("rot") oder eine Entscheidung zwischen den beiden zuvor genannten Fällen ist nicht eindeutig möglich ("gelb"). Um dem Benutzer insbesondere in den beiden zuletzt genannten Fällen eine eindeutige oder bessere Entscheidungsgrundlage für weitere Handlungen zu geben, beschreibt die vorliegende Erfindung ein Verfahren, wie in der unmittelbaren Umgebung des Orts der ersten Messung (erste Generation) weitere Messungen (zweite und weitere Generationen) durchgeführt werden können, um möglichst schnell und zuverlässig die notwendige spektrometrische aber auch räumliche Information zu gewinnen.

Eine räumlich ausgedehnte Probe im Sinne der vorliegenden Erfindung ist ein dreidimensionaler Gegenstand, insbesondere ein Paket, Päckchen oder ein Briefumschlag aus Papier oder Pappe, Kunststoff oder einem anderen für elektromagnetische Strahlung im THz-Frequenzbereich transparenten Material.

Chemische Substanzen, welche sich mit einer Ausführungsform des erfindungsgemäßen Verfahrens und/oder des erfindungsgemäßen Spektrometers erfassen lassen, sind beispielsweise Drogen, wie Heroin, Metamphetamin oder Ectasy, Sprengstoffe, wie PTN, RDX oder SEMTEX-H, Füll- und Streckmittel wie α-Laktose, Paracetamol oder Koffein, biologische oder chemische Kampfmittel, wie Anthrax, oder sogenannte Simulanzien, wie β-Laktose, p- Aminobenzoesäure (PABA), Weinsäure oder Maltose.

Entsprechend ist in einer Ausführungsform eine Anwendung des vorliegenden erfindungsgemäßen Verfahrens sowie des erfindungsgemäßen Spektrometers die Identifikation von Drogen und Explosivstoffen, beispielsweise bei der Posteingangskontrolle in öffentlichen Gebäuden oder Unternehmen.

Im Sinne der vorliegenden Anmeldung wird unter dem Terahertz-Frequenzbereich (THz-Frequenzbereich) ein Frequenzbereich von 1 GHz bis 30 THz, vorzugsweise jedoch ein Frequenzbereich von 100 GHz bis 5 THz, verstanden.

Um das charakteristische (Absorptions-)Spektrum einer chemischen Substanz erfassen zu können, ist es notwendig, die Substanz entweder mit einer Mehrzahl von voneinander verschiedenen Frequenzen oder einem ganzen Frequenzband aus dem genannten Frequenzbereich zu bestrahlen. Dabei kann das Frequenzband auch den gesamten Frequenzbereich umfassen.

Dabei werden in einer Ausführungsform für alle Messungen an den einzelnen Orten auf der Probe die identischen Frequenzen oder das identische Frequenzband verwendet.

Um die Spektren aufzunehmen, ist es erforderlich, ein Maß für die Intensität der auf die ausgedehnte Probe gestrahlten oder geleiteten und entweder durch die Probe transmittierten oder von der Probe reflektierten elektromagnetischen Strahlung frequenzaufgelöst zu erfassen.

Dabei kann zur frequenzaufgelösten Erfassung eines Maßes für die Intensität, das Maß unmittelbar frequenzaufgelöst gemessen werden. Alternativ kann eine Messung im Zeitbereich erfolgen, so wie dies bei den nachfolgend auch beschriebenen zeitaufgelösten THz-Spektrometern (TDS) der Fall ist. Dabei werden die im Zeitbereich gemessenen Werte für das elektrische Feld der Strahlung nachfolgend durch Fourier-Transformation in den Frequenzbereich übertragen. Auch diese Art der frequenzaufgelösten Ermittlung eines Maßes für die Intensität wird im Sinne der vorliegenden Anmeldung als Erfassen bezeichnet.

Unter einem Maß für die Intensität der elektromagnetischen Strahlung wird im Sinne der vorliegenden Anmeldung insbesondere die Intensität der Strahlung selbst, aber auch das elektrische Feld der Strahlung, dessen Quadrat proportional zu der Intensität ist, verstanden.

In einer Ausführungsform der Erfindung sind die erfassten Spektren sowie die Vergleichsspektren Extinktionsspektren, bei denen die Extinktion der elektromagnetischen Strahlung durch die ausgedehnte Probe bzw. die chemische Substanz gegen die Frequenz aufgetragen sind.

Während es für die Realisierung der grundlegenden Idee der vorliegenden Erfindung zunächst unerheblich ist, ob das Spektrum der räumlich ausgedehnten Probe in einer Reflexionsgeometrie oder in einer Transmissionsgeometrie erfasst wird, ist in einer Ausführungsform eine Transmissionsgeometrie, bei welcher sich die Probe zwischen einer Quelle für die elektromagnetische Strahlung und einem Detektor für die transmittierte Strahlung befindet, bevorzugt. In Transmissionsgeometrie sind die Absorptionslinien der zu identifizierenden chemischen Substanzen ausgeprägter.

In einer Ausführungsform ist der bestimmte Ort auf der Probe, an dem das Spektrum erfasst wird, derjenige Ort auf der Oberfläche der Probe, an dem die elektromagnetische Strahlung in die Probe eintritt und von dort durch die Probe transmittiert wird oder von der Probe reflektiert wird.

Unter einem Vergleichsspektrum wird ein zuvor gemessenes oder berechnetes Spektrum einer bestimmen chemischen Substanz verstanden. Diese ist beispielsweise in einer Datenbank der Steuer- und Auswerteeinrichtung des Spektrometers gespeichert. Ein an einem Ort auf der Probe erfasstes Spektrum wird mit diesem Vergleichsspektrum verglichen.

Ein solcher Vergleich zwischen einem erfassten Spektrum und einem Vergleichsspektrum erfolgt im Sinne der vorliegenden Anmeldung durch Berechnen eines Maßes für eine Übereinstimmung des erfassten Spektrums mit dem Vergleichsspektrum.

Ein solches Maß für eine Übereinstimmung zwischen dem erfassten Spektrum und dem Vergleichsspektrum ist beispielsweise die mathematische Kreuzkorrelation zwischen den beiden Spektren. Ein solches Maß für die Übereinstimmung kann auch als Wahrscheinlichkeit dafür betrachtet werden, dass es sich bei der durch die spektrometrische Messung an dem bestimmten Ort erfassten chemischen Substanz um eine der durch eines der Vergleichsspektren identifizierten chemischen Substanzen handelt oder nicht.

Im Sinne der vorliegenden Anmeldung werden zu einer Generation diejenigen Messungen an verschiedenen Orten zusammengefasst, die entweder Anlass für nachfolgende Messung an anderen Orten geben (Eltern) oder die Folge von Messungen mit nicht hinreichendem Ergebnis an anderen Orten sind (Nachkommen).

Während in einem einfachen Beispiel davon ausgegangen wird, dass die erste Generation von Spektren nur ein einziges Spektrum an einem einzigen Ort auf der Probe umfasst, kann die erste Generation alternativ auch eine Mehrzahl von an über die Probe verteilten Orten erfassten Spektren aufweisen.

In einer Ausführungsform wird der oder werden die Orte der ersten Generation auf der Probe durch eine zufällige Auswahl oder ein Auswählen des Orts auf der Probe durch einen Benutzer, bestimmt.

In einer alternativen Ausführungsform der Erfindung wählt zum Bestimmen eines Orts oder einer Mehrzahl von Orten der ersten Generation auf der Probe ein Benutzer auf der Probe einen Bereich aus, innerhalb dessen dann eine zufällige Auswahl des Orts oder der Orte erfolgt. Dies ist insbesondere dann vorteilhaft, wenn der Benutzer ein Bild der Probe in dem Spektrometer sieht und festlegen kann, in welchem Bereich die einzelnen spektrometrischen Messungen erfolgen sollen. Als Beispiel kann dabei ein Briefumschlag dienen, wobei der Benutzer vorteilhafterweise die Außenkontur des Umschlags als denjenigen Bereich auswählt, innerhalb dessen dann eine zufällige Auswahl des Orts oder der Orte für das oder die Spektren der ersten Generation erfolgt.

Liegt das Maß für eine Übereinstimmung des erfassten Spektrums der ersten Generation mit einem der Vergleichsspektren in einem vorgegebenen Bereich, so werden Nachkommen für dieses Spektrum der ersten Generation dadurch generiert, dass in der Umgebung des Orts des Spektrums der ersten Generation weitere Messungen ausgeführt werden, wobei jeweils ein Maß für eine Übereinstimmung mindestens eines erfassten Spektrums einer zweiten Generation mit jedem der Vergleichsspektren generiert wird.

Dabei ist die Entscheidungsschwelle dafür, ob eine weitere Generation von Spektren erzeugt wird oder nicht, beispielsweise vom Benutzer, vorgegeben. Ein Beispiel für eine Überprüfung, ob das berechnete Maß für die Übereinstimmung des erfassten Spektrums der ersten Generation mit einem der Vergleichsspektren in einem vorgegebenen Bereich liegt, ist beispielsweise die Beantwortung der Frage ob die Wahrscheinlichkeit dafür, dass das erfasste Spektrum eine der durch die Vergleichsspektren charakterisierten chemischen Substanzen identifiziert, größer als 50 % ist. In einem solchen Fall ist es beispielsweise nach einer einzigen Messung in der ersten Generation zu früh, um einen Alarm auszulösen oder es liegt noch gar keine ausreichende Entscheidungsgrundlage vor. In der Folge wird die Erfassung weiterer Spektren in der zweiten Generation veranlasst.

Insbesondere wird in einer Ausführungsform der Erfindung nur dann ein Maß für eine Übereinstimmung eines Spektrums der n+1-ten Generation mit jedem der Vergleichsspektren generiert, wenn eine Wahrscheinlichkeit dafür, dass an dem Ort auf der Probe, an dem das Spektrum der n-ten Generation erfasst wurde, eine chemische Substanz ist, mit deren Vergleichsspektrum das erfasste Spektrum verglichen wurde, größer ist als ein vorgegebener Schwellenwert.

So werden zunächst eine vorgegebene Anzahl von Orten der zweiten Generation, die sich voneinander, aber auch von dem Ort der ersten Generation unterscheiden, in der Umgebung, das heißt in einem vorgegebenen Bereich, um den Ort der ersten Generation herum, bestimmt, an denen dann die spektrometrischen Messungen ausgeführt werden.

Zum Bestimmen der Orte der zweiten, aber auch jeder nachfolgenden Generation, können diese in einer Ausführungsform so gewählt werden, dass jeder mit einem vorgegebenen Abstand und mit einer vorgegebenen Richtung von dem jeweiligen Ort der vorhergehenden Generation angeordnet ist. Die Messungen der Nachkommen erfolgt dann somit in einem festgelegten räumlichen Raster um die Elterngeneration herum.

In einer alternativen Ausführungsform werden die Orte der n+1-ten Generation (Nachkommen) auf der Probe mit folgenden Schritten in der angegebenen Reihenfolge bestimmt: Definieren eines Bereichs um den Ort der n-ten Generation (Eltern), vorzugsweise eines Kreises mit einem Radius r, zufälliges Auswählen einer Anzahl von Orten im definierten Bereich, wobei die Anzahl der in diesem Schritt zufällig ausgewählten Orte größer ist als die vorgegebene Anzahl der zu bestimmenden Orte der n+1-ten Generation, Bestimmen eines ersten Ortes der n+1-ten Generation aus der Menge der im vorhergehenden Schritt ausgewählten Orte, Bestimmen eines weiteren Ortes der n+1-ten Generation aus der Menge der zuvor ausgewählten Ort in dem definierten Bereich, wobei derjenige Ort bestimmt wird, der einen maximalen Abstand von dem Ort der n-ten Generation und von allen zuvor bestimmten Orten aller vorherigen Generationen in dem definierten Bereich aufweist und Wiederholen des vorhergehenden Schrittes so lange, bis die vorbestimmte Anzahl von Orten der n+1-ten Generation bestimmt ist.

Eine solche Auswahl der Orte, an welchen die spektrometrischen Messungen der Nachkommengeneration erfolgt, weist den Vorteil auf, dass sie im Mittel einen maximierten Informationsgewinn über die Probe in möglichst kurzer Zeit ermöglicht.

Dabei wird in einer Ausführungsform der Erfindung der erste Ort der n+1-ten Generation zufällig bestimmt. In einer alternativen Ausführungsform wird der erste Ort der n+1-ten Generation wie die weiteren Orte der n+1-ten Generation aus der Menge der zuvor ausgewählten Orte in dem definierten Bereich als derjenige Ort bestimmt, der einen maximalen Abstand von den Orten aller vorherigen Generationen in dem definierten Bereich aufweist.

In einer Ausführungsform der Erfindung wird bei dem Bestimmen der Orte auf der Probe für eine neue Generation von Spektren ein Gradient zwischen mindestens zwei an zwei verschiedenen Orten generierten Maßen für eine Übereinstimmung eines erfassten Spektrums mit einem der Vergleichsspektren berücksichtigt. Vorzugsweise jedoch werden die Gradienten zwischen allen zuvor generierten Maßen für eine Übereinstimmung eines erfassten Spektrums mit einem der Vergleichsspektren berücksichtigt. Auf diese Weise lässt sich eine Richtung bestimmen, in welcher die Wahrscheinlichkeit für das Vorliegen einer bestimmten durch ein Vergleichsspektrum identifizierten chemischen Substanz zunimmt und Nachkommen gezielt in dieser Richtung generieren.

Es versteht sich, dass die vorliegende Erfindung nicht auf die Erzeugung zweier Generationen von Spektren beschränkt ist, sondern ohne Einschränkung drei oder mehr Generationen erzeugt werden können bzw. in einer Ausführungsform wünschenswerterweise erzeugt werden.

Dazu wird in einer Ausführungsform der Erfindung dann, wenn das berechnete Maß für die Übereinstimmung eines erfassten Spektrums der zweiten oder allgemein n-ten Generation an einem Ort auf der Probe mit einem der Vergleichsspektren in einem vorgegebenen Bereich liegt, durch Ausführen der folgenden Schritte jeweils ein Maß für eine Übereinstimmung eines erfassten Spektrums einer dritten oder allgemein n+1-ten Generation mit einem der Vergleichsspektren generiert: Bestimmen einer vorgegebenen Anzahl von Orten der dritten oder n+1-ten Generation, so dass alle Orte der dritten oder n+1-ten Generation auf der Probe voneinander und von den Orten aller anderen Generationen verschieden sind und alle Orte der dritten oder n+1-ten Generation auf der Probe in einem vorgegebenen Bereich um den Ort der zweiten oder n-ten Generation auf der Probe herum angeordnet sind, Bestrahlen der Probe mit elektromagnetischer Strahlung mit der Mehrzahl von Frequenzen oder dem Frequenzband aus einem Frequenzbereich von 1GHz bis 30 THz an den Orten der dritten oder n+1-ten Generation auf der Probe, frequenzaufgelöstes Erfassen jeweils eines Maßes für die Intensität der an den Orten der dritten oder n+1-ten Generation auf die Probe gestrahlten und durch die Probe transmittierten oder von der Probe reflektierten elektromagnetischen Strahlung als Spektren der dritten oder n+1-ten Generation und Berechnen jeweils eines Maßes für eine Übereinstimmung eines jeden erfassten Spektrums der dritten oder n+1-ten Generation mit jedem der vorbestimmten Vergleichsspektren.

Dabei kann es in einer Ausführungsform der Erfindung zweckmäßig sein, wenn die maximale Anzahl von Generationen von erfassten Spektren auf einen vorgegebenen Wert, beispielsweise 50, begrenzt ist.

Es hat sich jedoch auch gezeigt, dass häufig die Begrenzung der maximalen Anzahl von Generationen von erfassten Spektren nicht erforderlich ist, wenn in Ausführungsformen andere Randbedingungen gesetzt sind und so die Nachkommen irgendwann "aussterben".

Eine solche Randbedingung ist die vorgegebene Anzahl von Orten auf der Probe in einer Generation, an denen in einer Generation von Spektren diese erfasst werden. Diese vorgegebene Anzahl kann in einer Ausführungsform über die Generationen hinweg konstant sein, mit der zunehmenden Ordnung der Generationen abnehmen oder Mischformen davon umfassen.

In einer speziellen Ausführungsform werden in der zweiten Generation Spektren an drei Orten erfasst, in der dritten Generation Spektren an zwei Orten erfasst und in der vierten und jeder weiteren Generation jeweils nur ein Spektrum an einem Ort erfasst.

In einer Ausführungsform der Erfindung kann eine solche Regel für die Anzahl der Nachkommen in einer Generation dadurch aufgeweicht werden, dass wenn an einem Ort in einer Generation mit Sicherheit (das heißt mit einer Wahrscheinlichkeit, die über einem vorgegebenen Schwellenwert liegt) keine durch die Vergleichsspektren spezifizierte chemische Substanz vorhanden ist, ein weiterer, vorzugsweise genau ein weiterer Nachkomme in der gleichen Generation erzeugt wird, um den Informationsgewinn in dieser Generation zu maximieren. Dazu wird in einer Ausführungsform dann, wenn für ein an einem Ort auf der Probe erfasstes Spektrum der n-ten Generation keine Wahrscheinlichkeit dafür, dass an diesem Ort auf der Probe eine chemische Substanz vorhanden ist, mit deren Vergleichsspektrum das erfasste Spektrum verglichen wurde, vorliegt, die größer ist als ein vorgegebener Schwellenwert, in der gleichen n-ten Generation ein weiteres Maß für eine Übereinstimmung eines erfassten Spektrums an einem weiteren Ort mit einem oder einer Mehrzahl von vorbestimmten Vergleichsspektren chemischer Substanzen generiert.

Um den Informationsgewinn durch das Erzeugen eines zusätzlichen Nachkommens in der gleichen Generation unter den oben genannten Bedingungen zu maximieren, wird in einer weiteren Ausführungsform der Erfindung der weitere Ort der n-ten Generation auf der Probe mit folgenden Schritten in der angegebenen Reihenfolge bestimmt: Definieren eines Bereichs um den Ort der n+1-ten Generation, vorzugsweise eines Kreises mit einem Radius r, Auswählen eines Ortes in dem definierten Bereich in dessen Umgebung eine minimale Dichte von Orten, an denen Spektren erfasst wurden, vorliegt, als dem weiteren Ort.

In einer weiteren Ausführungsform der Erfindung wird dann, wenn für ein an einem Ort auf der Probe erfasstes Spektrum der n-ten Generation keine Wahrscheinlichkeit dafür, dass an diesem Ort auf der Probe eine chemische Substanz vorhanden ist, mit deren Vergleichsspektrum das erfasste Spektrum verglichen wurde, vorliegt, die größer ist als ein vorgegebener Schwellenwert, das an diesem Ort erfasste Spektrum als Referenzspektrum für die anderen erfassten Spektren oder noch zu erfassenden Spektren verwendet. Dazu wird das Referenzspektrum in einer Ausführungsform von den anderen erfassten Spektren als Offset abgezogen.

In einer Ausführungsform der Erfindung werden die Orte auf der Probe, für die ein Spektrum erfasst wurde, in einer schematischen Darstellung auf einem Bildschirm angezeigt. Dabei ist es in einer Ausführungsform zweckmäßig, wenn die schematische Darstellung eine Abbildung der Probe, beispielsweise eine Fotografie oder eine, vorzugsweise live, Videoaufnahme, der Probe umfasst, der die Orte auf der Probe, für die ein Spektrum erfasst wurde, grafisch überlagert sind.

In einer Ausführungsform werden einer jeden Messung an einem Ort, d.h. das Maß für eine Übereinstimmung eines erfassten Spektrums mit mindestens einem der vorbestimmten Vergleichsspektren, farbcodiert an dem entsprechenden Ort in der schematischen Darstellung angezeigt wird. Auf diese Weise kann der Benutzer schnell das Ergebnis der Messungen erfassen und es wird ihm eine einfache Möglichkeit zur Entscheidungsfindung an die Hand gegeben.

Soweit die vorliegende Erfindung auch ein Spektrometer für die Spektrometrie an einer räumlich ausgedehnten Probe betrifft, so ist dieses zum Ausführen des zuvor beschriebenen Verfahrens zur Spektrometrie sowie aller seiner Ausführungsformen ausgestaltet.

Soweit zuvor Aspekte der Erfindung im Hinblick auf das Verfahren zur Spektrometrie beschrieben wurden, so gelten diese auch für das entsprechende Spektrometer. Soweit das Verfahren mit einem Spektrometer gemäß dieser Erfindung ausgeführt wird, so weist dieses die entsprechenden Einrichtungen hierfür auf. Das erfindungsgemäße Spektrometer verfügt insbesondere über eine Steuereinrichtung sowie eine Auswerteeinrichtung, welche das Spektrometer steuern und die Spektren erfassen und auswerten, sodass das erfindungsgemäße Verfahren ausgeführt werden kann.

Während das erfindungsgemäße Spektrometer mit jeder Art von Quelle und Detektor realisiert werden kann, welche es ermöglichen, gleichzeitig oder nacheinander verschiedene Frequenzen aus dem Frequenzbereich von 1 GHz bis 30 THz auf die mehrlagige Struktur zu leiten und zu erfassen, eignen sich in besonderer Weise optoelektronische Ansätze zur kohärenten Erzeugung und Detektion von der Terahertz-Strahlung für die Realisierung des erfindungsgemäßen Spektrometers.

Um ein solches optoelektronisches Spektrometer mit einer Quelle und einem Detektor für den Frequenzbereich von 1 GHz bis 30 THz zu realisieren, weist dieses einen Laser, ein erstes optoelektronisches Hochfrequenzbauteil als Quelle sowie ein zweites optoelektronisches Hochfrequenzbauteil als Detektor für die elektromagnetische Strahlung und einen Strahlteiler, welcher so eingerichtet und angeordnet ist, dass er im Betrieb des Spektrometers einen Teil der von dem Laser emittierten elektromagnetischen Strahlung auf das erste Hochfrequenzbauteil leitet und einen Teil der von dem Laser emittierten elektromagnetischen Strahlung auf das zweite Hochfrequenzbauteil leitet, auf.

In einer Ausführungsform eines solchen Spektrometers ist der Laser ein Laser zur Erzeugung ultrakurzer elektromagnetischer Impulse vorzugsweise mit einer Impulsdauer von 150 fs oder weniger.

Das erste und das zweite optoelektronische Hochfrequenzbauteil als Quelle bzw. Detektor für die elektromagnetische Strahlung in einem Frequenzbereich von 1 GHz bis 30 THz ist in einer Ausführungsform jeweils alternativ ein photoleitfähiger Schalter oder ein elektrooptischer Kristall. Bei Verwendung eines elektrooptischen Kristalls werden die nicht-linearen Effekte im Kristall ausgenutzt, um aus der elektromagnetischen Strahlung des Lasers die elektromagnetische Strahlung in dem Frequenzbereich von 1 GHz bis 30 THz zu erzeugen oder zu erfassen.

Bei der Verwendung eines photoleitfähigen oder photokonduktiven Schalters, gegebenenfalls in Kombination mit jeweils einer daran angeschlossenen Antenne, bewirkt das Auftreffen eines kurzen elektromagnetischen Impulses auf den photoleitfähigen Schalter einer entsprechenden elektrischen Vorspannung des Hochfrequenzbauteils einen kurzen Stromimpuls in dem Bauteil und somit die Abstrahlung eines breitbandigen Pulses im Terahertz-Frequenzbereich. Der kurze elektromagnetische Impuls des Lasers auf der Detektorseite dient demgegenüber dazu, den Detektor mit Hilfe des photoleitfähigen Schalters kurzzeitig zu schalten, und so das elektrische Feld der gleichzeitig auf das Hochfrequenzbauteil des Detektors auftreffenden elektromagnetischen Strahlung im THz-Frequenzbereich messbar zu machen. Misst man an den Zuleitungen des photoleitfähigen Schalters des als Detektor verwendeten Hochfrequenzbauteils einen Strom, so lässt sich das Feld der elektromagnetischen Terahertz-Strahlung, welches auf das Hochfrequenzbauteil auftrifft, zeitaufgelöst erfassen.

Das elektrische Feld der auf den Detektor auftreffenden elektromagnetischen THz-Strahlung treibt Ladungsträger in Längsrichtung über den Schalter. Dabei ist ein Stromfluss nur dann möglich, wenn gleichzeitig der photoleitfähige Schalter geschlossen ist, das heißt, der Schalter mit elektromagnetischer Strahlung des Lasers bestrahlt wird. Da der zum Schalten des photoleitfähigen Schalters verwendete elektromagnetische Impuls kurz gegenüber dem Zeitverlauf des elektrischen Feldes des von dem Detektor empfangenen Impulses im THz-Frequenzbereich ist, lässt sich das elektrische Feld des THz-Signals zeitaufgelöst abtasten bzw. messen, indem ein Zeitversatz zwischen dem auf den Schalter auftreffenden THz-Impuls und dem zum Schalten des photoleitfähigen Schalters verwendeten elektromagnetischen Impuls eingeführt und während der Messung variiert wird.

Das so erfasste zeitaufgelöste elektromagnetische Feld lässt sich durch Fourier-Transformation in ein entsprechendes frequenzaufgelöstes Spektrum umwandeln.

Es versteht sich, dass das Spektrometer in einer Ausführungsform mit einem photoleitfähigen Schalter als Detektor für die THz-Strahlung einen geeigneten Strom- oder Spannungsverstärker aufweist, welcher zum Erfassen der Ströme über den Schalter des Detektors mit diesem verbunden ist.

Das optoelektronische Spektrometer mit den erfindungsgemäßen Hochfrequenzbauteilen lässt sich jedoch alternativ zu einem Laser mit kurzen elektromagnetischen Impulsen auch mit monochromatischer Laserstrahlung betreiben. Dazu stellt dann ein Laser oder auch zwei miteinander gekoppelte Laser zwei Laserfrequenzen mit einem Frequenzabstand, der gleich der zur Spektrometrie zu verwendenden elektromagnetischen Strahlung in dem Frequenzbereich von 1 GHz bis 30 THz ist, bereit. Diese werden räumlich überlagert. Das so entstehende elektromagnetische Schwebungssignal wird auf die optoelektronischen Hochfrequenzbauteile als Quelle und Detektor geben. Das Schwebungssignal erzeugt hier dann monochromatische elektromagnetische Strahlung im THz-Bereich.

In einer solchen Ausführungsform wird die Frequenz der elektromagnetischen Strahlung im THz-Bereich durch Abstimmung der Differenzfrequenz zwischen den beiden von dem oder den Lasern generierten elektromagnetischen Strahlungsanteilen eingestellt bzw. durchgestimmt.

Weitere Vorteile, Merkmale und Anwendungsmöglichkeiten der vorliegenden Erfindung werden anhand der folgenden Beschreibung einer Ausführungsform und der dazugehörigen Figuren deutlich.
Figur 1 zeigt eine schematische Draufsicht auf eine Spektrometer gemäß der vorliegenden Erfindung.
Figur 2 zeigt eine Darstellung eines Maßes für eine Übereinstimmung eines erfassten Spektrums der ersten Generation mit einem Vergleichsspektrum auf einem Bildschirm.
Figur 3 zeigt eine vergrößerte schematische Ansicht der Generierung von erfassten Spektren der zweiten Generation.
Figur 4 zeigt eine vergrößerte schematische Ansicht der Generierung von erfassten Spektren der dritten Generation.
Figur 5 zeigt eine einer Mehrzahl von erfassten Spektrums einer Mehrzahl von Generationen auf einem Bildschirm.

In den Figuren sind gleiche Elemente mit gleichen Bezugszeichen bezeichnet.

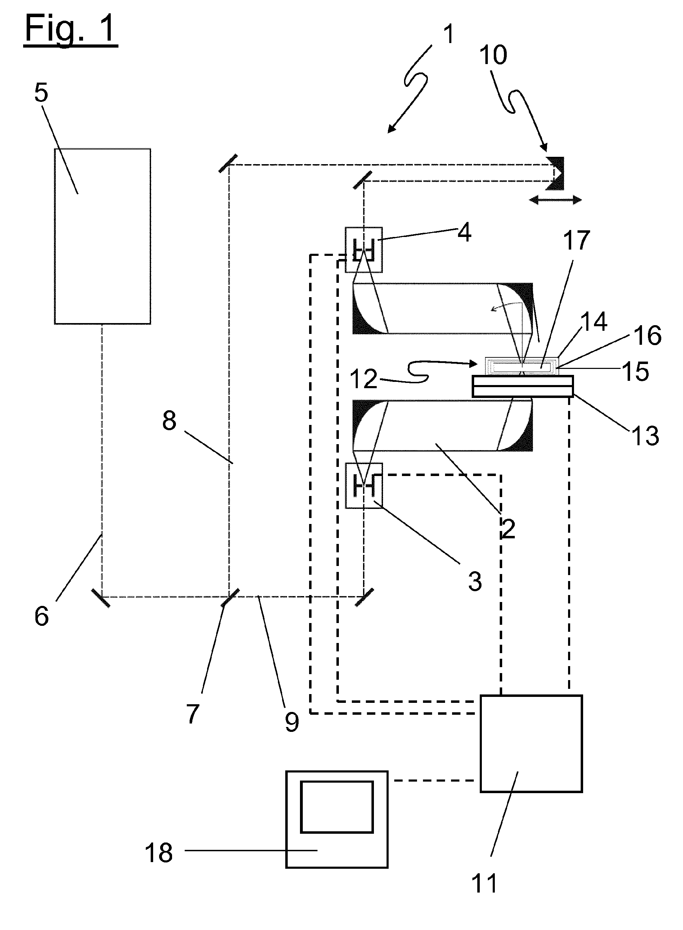

Figur 1 zeigt schematisch den Aufbau eines erfindungsgemäßen Spektrometers 1, bei welchem die elektromagnetische Hochfrequenzstrahlung 2 in einem Frequenzbereich von 1 GHz bis 30 THz mit photoleitfähigen Schaltern als Quelle 3 und Detektor 4 für die Hochfrequenzstrahlung 2 erzeugt und erfasst wird.

Herzstück des dargestellten Spektrometers 1 ist ein Laser 5 zur Erzeugung kurzer elektromagnetischer Impulse 6 im infraroten Spektralbereich. Die Impulsdauer der von dem Laser 5 erzeugten Impulse beträgt etwa 100 fs. Jeder von dem Laser 5 erzeugte Impuls 6 wird an einem Strahlteiler 7 in zwei räumlich getrennte Impulse 8, 9 etwa gleicher Leistung aufgeteilt. Dabei sind die Weglängen der optischen und Hochfrequenzsignale auf dem Pfad von dem Strahlteiler 7 und die Quelle 3 zu dem Detektor 4 einerseits und von dem Strahlteiler 7 über eine Verzögerungsstrecke 10 zu dem Detektor 4 andererseits so eingerichtet, dass das Hochfrequenzsignal 2 gleichzeitig mit den zweiten Teil 8 des Impulses 6, dessen erster Teil 9 die Erzeugung des Hochfrequenzimpulses 2 in der Quelle 3 bewirkt hat, auf den Detektor 4 auftrifft.

In der dargestellten Ausführungsform bestehen die Quelle 3 und der Detektor 4 jeweils aus einem Hochfrequenzbauteil, welches als photoleitfähiger Schalter mit jeweils einer Antenne für die Hochfrequenzstrahlung 2 ausgestaltet ist.

Jedes der Hochfrequenzbauteile 3, 4 verfügt über eine Dipolstruktur als Antenne. Jeder der Dipolantennen weist in ihrer Mitte eine Unterbrechung auf, welche zusammen mit einem unter der Antennenstruktur liegenden photoleitenden Halbleitersubstrat einen photoleitfähigen Schalter bildet. Die von dem Laser 5 erzeugte elektromagnetische Strahlung in Form kurzer Impulse 6 wird auf diese photoleitfähigen Schalter fokussiert. Dabei ist es alternativ auch möglich die von dem Laser 5 erzeugte elektromagnetische Strahlung mit Hilfe optischer Lichtleitfasern auf die photoleitfähigen Schalter zu leiten. In einer solchen Ausführungsform ist es ggf. notwendig, die Dispersion, welche die einzelnen Impulse in der Faser erfahren vorzukompensieren.

Sowohl die Quelle 3 als auch der Detektor 4 weisen für die jeweilige Dipolantenne jeweils zwei Zuleitungen auf.

In der dargestellten Ausführungsform ist das Halbleitersubstrat für den photoleitfähigen Schalter ein bei niedrigen Temperaturen gewachsenes Galliumarsenid mit kurzen Ladungsträgerlebenszeit bzw. Ladungsträgereinfangzeiten.

Im Betrieb des Spektrometers 1 wird an das als Quelle 3 verwendete Hochfrequenzbauteil eine rechteckförmig modulierte Vorspannung über die Zuleitungen der Antenne angelegt. Dabei dient die rechteckförmige Modulation dazu, die elektromagnetische Strahlung detektorseitig mit Hilfe eines Lock-In-Verstärkers erfassen zu können, dessen Referenzsignal an die Modulation der Vorspannung der Quelle 3 phasengekoppelt ist. Durch das kurzzeitige schließen des photoleitfähigen Schalters wird ein kurzer Stromimpuls über die Antenne bewirkt, welcher zur Abstrahlung eines breitbandigen Hochfrequenzimpulses 2 von der Antenne führt.

Betrachtet man das detektorseitig verwendete Hochfrequenzbauteil 4, so wird dort der über die Antenne und den von dieser gebildeten photoleitfähigen Schalter fließende Strom erfasst bzw. gemessen. Zu diesem Zweck ist das Hochfrequenzbauteil 4 mit einer Steuer- und Auswerteeinrichtung 11 verbunden. Diese wird im vorliegenden Fall von einem herkömmlichen Industrie-PC gebildet. Die Steuer- und Auswerteeinrichtung 11 ist zudem mit einem Monitor 18 zur Darstellung der Messergebnisse verbunden.

Dabei führt das auf die Antenne des Detektors 4 auftreffende elektromagnetische Feld des Hochfrequenzimpulses 2 zu einem Treiben von Ladungsträgern über die Antenne bzw. den Schalter und damit zu einem Strom. Allerdings kann der Strom über die Antenne nur in dem Moment fließen, wenn der photoleitfähige Schalter durch das Eintreffen eines elektromagnetischen Impulses 8 des Lasers 5 geschlossen ist. Da der elektromagnetische Impuls, welcher zum Schließen des photoleitfähigen Schalters detektorseitig verwendet wird, zeitlich kurz gegenüber dem auf die Antenne auftreffenden Hochfrequenzimpuls ist, kann durch Verschieben der Ankunftszeiten der beiden relativ zueinander mit Hilfe der Verzögerungsstrecke 10 das elektrische Feld des Hochfrequenz-Impulses 2 zeitlich aufgelöst abgetastet werden. Dieses zeitlich aufgelöste elektrische Feld des elektromagnetischen Hochfrequenzimpulses 2 kann mit Hilfe einer Fourier-Transformation in ein Intensitätsspektrum im Frequenzraum übertragen werden.

In der dargestellten Ausführungsform des Spektrometers aus Figur 1 ist die Probe 12 auf einem x-y-Positioniertisch 13 angeordnet, welcher motorisch angetrieben und von der Auswerte- und Steuereinrichtung 11 angesteuert automatisiert bewegt wird. Mit Hilfe des Positioniertischs 13 lässt sich während der Messung der Ort auf der Probe 12 einstellen, an welchem die elektromagnetische Hochfrequenzstrahlung 2 auf die Probe 12 auftrifft.

Bei der Probe 12 handelt es sich in diesem Beispiel um einen Briefumschlag 17, in welchem wiederum in zwei Papiertüten 15, 16 verpackt SEMTEX-H 14 enthalten ist. Dabei bildet die Probe 12 die ausgedehnte Probe im Sinne der vorliegenden Anmeldung und SEMTEX-H 14 ist die spektrometrisch zu erfassende chemische Substanz.

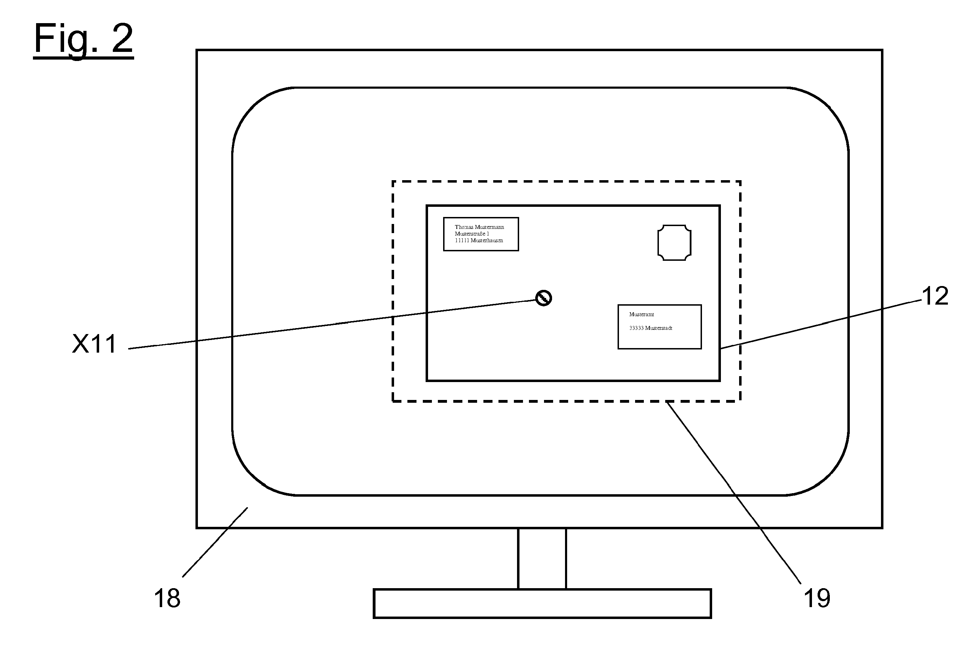

In Figur 2 ist nun schematisch die Anzeige der Messergebnisse des Spektrometers 1 aus Figur 1 auf dem Monitor 18 dargestellt. Figur 2 zeigt dabei die Ansicht zu Beginn der Messungen an einem Briefumschlag 12, dessen Inhalt ohne ihn zu öffnen in der Poststelle eines Unternehmens auf gefährliche Substanzen geprüft werden soll. Dabei zeigt der Monitor 14 ein Digitalfoto des Umschlags 12, so wie er sich im Strahlengang des Spektrometers 1 befindet.

In einem ersten Schritt hat der Benutzer mit Hilfe einer Maus (nicht dargestellt) eine Messfläche 19 festgelegt, innerhalb derer alle Orte, an denen Spektren gemessen bzw. erfasst werden sollen, liegen müssen.

In der beschriebenen Ausführungsform wählt nun die Steuer- und Auswerteeinrichtung 11 zufällig einen Ort X11 innerhalb der Messfläche 19 aus, an welchem das Spektrum der ersten Generation von Spektren erfasst wird. Während hier der Einfachheit halber von nur einem Spektrum an einem einzigen Ort X11 in der ersten Generation von Spektren ausgegangen wird, könnten ebenso gut an verschiedenen Orten auf der Probe mehrere Spektren in der ersten Generation von Spektren erfasst werden.

In dem hier beschriebenen Beispiel wird davon ausgegangen, dass das an dem Ort X11 erfasste Spektrum eine hohe Korrelation mit einem in einer Datenbank der Steuer- und Auswerteeinrichtung 11 gespeicherten Vergleichsspektrum für SEMTEX-H aufweist. Dabei liegt die Korrelation über einem definierten Schwellenwert. Der Ort X11 in der Darstellung auf dem Monitor 14 ist entsprechend farblich "rot" (schematisch als Schraffur gezeigt) markiert. Würde auf Grundlage dieser einzelnen Messung vom Benutzer beispielsweise ein Alarm ausgelöst, so wäre das Risiko eines Fehlalarms deutlich erhöht.

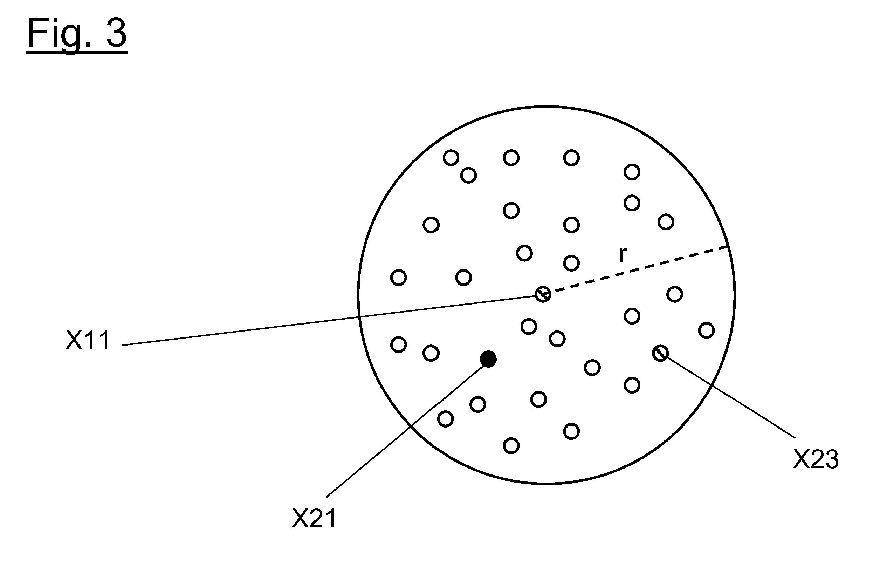

Da die Korrelation zwischen dem am Ort X11 erfassten Spektrum und dem Vergleichsspektrum von SEMTEX-H über dem voreingestellten Schwellenwert liegt, werden erfindungsgemäß Spektren einer zweiten Generation an weiteren Orten in der unmittelbaren Umgebung des Orts X11 erfasst. Dieser Vorgang ist schematisch in Figur 3 dargestellt, die eine vergrößerte Ansicht um den Punkt X11 herum zeigt.

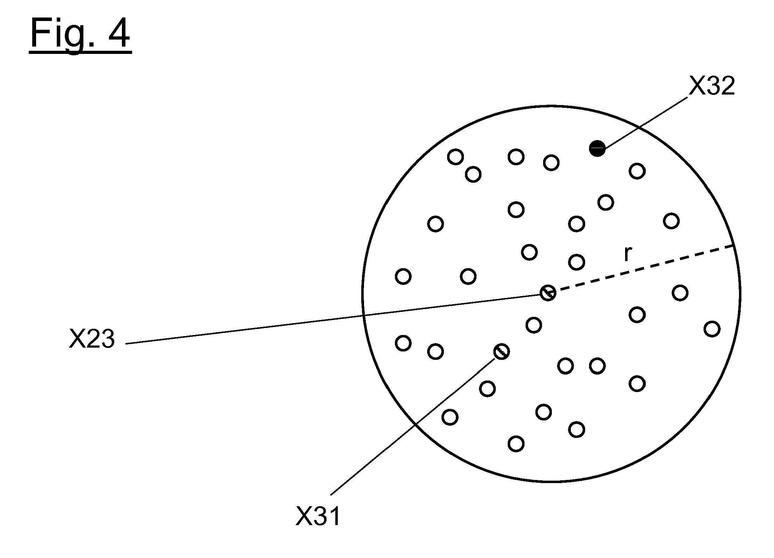

Die Auswertesoftware definiert einen Umgebungsbereich innerhalb eines Radius r um den Ort X11 herum, in welchem alle Nachfahren der zweiten Generation, d.h. Spektren der zweiten Generation, liegen müssen. Zum Bestimmen der Orte X2n der zweiten Generation von Spektren werden zunächst zufällig Orte, im vorliegenden Beispiel 33 Orte, innerhalb des Kreises mit Radius r um den Ort X11 ausgewählt. Diese zufällig gewählten Orte sind in den Figuren 3 und 4 als nicht-gefüllte Kreise markiert, wobei diese Hilfspunkte dem Benutzer nicht angezeigt werden. Wiederum zufällig wird von diesen Orten einer als erster Nachkomme X21 gewählt. Die weiteren Orte X2n der zweiten Generation werden dann so bestimmt, dass sie jeweils einen maximalen Abstand von allen der zuvor gewählten Orte X11, X2n, für die bereits ein Spektrum erfasst wurde oder für die noch ein Spektrum erfasst werden soll, aufweisen. Auf diese Weise kann sichergestellt werden, dass die Orte einer Generation so um den Ort der vorherigen Generation verteilt sind, dass ein maximierter Informationsgewinn über die Probe erzielt wird.

In dem hier beschriebenen Beispiel werden in der zweiten Generation Spektren an drei Orten X21, X22, X23, in der dritten Generation Spektren an zwei Orten X31, X32 erfasst und in der vierten und jeder weiteren Generation jeweils ein Spektrum an einem Ort X41, Xi1 erfasst. Dabei ist die maximale Anzahl von Generationen i in diesem Beispiel zusätzlich auf 50 beschränkt.

Es wird davon ausgegangen dass in der zweiten Generation lediglich an dem Ort X23 ein Spektrum erfasst wurde, welches eine ausreichend hohe Korrelation mit dem Vergleichsspektrum von SEMTEX-H aufweist. Folglich wird nachfolgend wie in Figur 4 dargestellt nur um den Ort X23 herum ein Nachkomme in der dritten Generation generiert. Die erforderlichen Schritte werden solange wiederholt, bis die maximal zulässige Anzahl von Generationen erreicht ist oder keine Nachkommen mehr erzeugt werden, da die erfassten Spektren an allen Orten keine ausreichend hohe Korrelation mit irgendeinem der Vergleichsspektren mehr aufweisen.

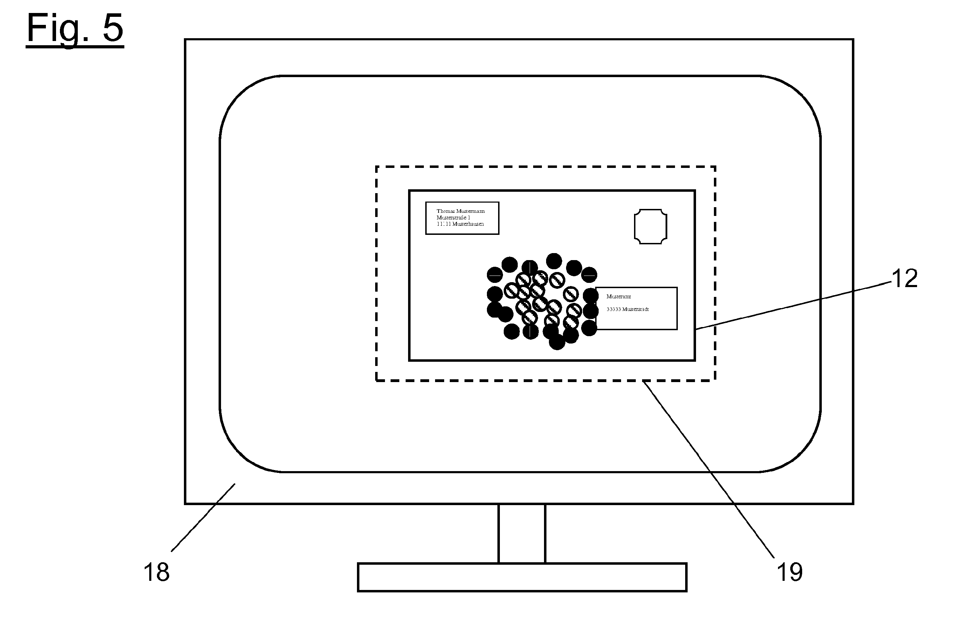

Realistisch ergibt sich für einen in einem Umschlag lokalisierten Gefahrenstoff ein Bild, so wie es schematisch in Figur 5 gezeigt ist, wobei mit vergleichsweise wenigen Messungen auch Information über die räumliche Verteilung des Gefahrstoffs generiert werden.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Spektrometer
- 2: Hochfrequenzstrahlung
- 3: Quelle
- 4: Detektor
- 5: Laser
- 6: elektromagnetischer Impuls im infraroten Spektralbereich
- 7: Strahlteiler
- 8: zweiter Teil des Impulses 6
- 9: erster Teil des Impulses 6
- 10: Verzögerungsstrecke
- 11: Steuer- und Auswerteeinrichtung
- 12: Probe
- 13: Positioniertisch
- 14: SEMTEX-H
- 15, 16: Papiertüte
- 17: Briefumschlag
- 18: Monitor
- 19: Auswahlbereich
- X11: Ort des Spektrums der ersten Generation auf der Probe 12
- X2n: Orte der Spektren der zweiten Generation auf der Probe 12
- X3n: Orte der Spektren der dritten Generation auf der Probe 12

## Patentansprüche

1. Verfahren zur Spektrometrie an einer räumlich ausgedehnten Probe mit Generieren eines Maßes für eine Übereinstimmung eines erfassten Spektrums einer ersten Generation mit einem oder einer Mehrzahl von vorbestimmten Vergleichsspektren chemischer Substanzen, das die Schritte umfasst:
Bestimmen mindestens eines Orts der ersten Generation auf der Probe,
Bestrahlen der Probe mit elektromagnetischer Strahlung mit einer Mehrzahl von Frequenzen oder einem Frequenzband aus einem Frequenzbereich von 1 GHz bis 30 THz an dem bestimmten Ort der ersten Generation auf der Probe,
frequenzaufgelöstes Erfassen eines Maßes für die Intensität der an dem Ort der ersten Generation auf die Probe gestrahlten und durch die Probe transmittierten oder von der Probe reflektierten elektromagnetischen Strahlung als Spektrum der ersten Generation und
Berechnen jeweils eines Maßes für eine Übereinstimmung des erfassten Spektrums der ersten Generation mit einem der Vergleichsspektren,
**dadurch gekennzeichnet, dass** wenn das berechnete Maß für die Übereinstimmung des erfassten Spektrums der ersten Generation mit einem der Vergleichsspektren in einem vorgegebenen Bereich liegt, durch Ausführen der folgenden Schritte ein Maß für eine Übereinstimmung mindestens eines erfassten Spektrums einer zweiten Generation mit jedem der Vergleichsspektren generiert wird:
Bestimmen einer vorgegebenen Anzahl von Orten der zweiten Generation, so dass alle Orte der zweiten Generation auf der Probe voneinander und von dem Ort der ersten Generation verschieden sind und alle Orte der zweiten Generation auf der Probe in einem vorgegebenen Bereich um den Ort der ersten Generation herum angeordnet sind,
Bestrahlen der Probe mit elektromagnetischer Strahlung mit der Mehrzahl von Frequenzen oder dem Frequenzband aus einem Frequenzbereich von 1 GHz bis 30 THz an den Orten der zweiten Generation auf der Probe,
frequenzaufgelöstes Erfassen jeweils eines Maßes für die Intensität der an den Orten der zweiten Generation auf die Probe gestrahlten und durch die Probe transmittierten oder von der Probe reflektierten elektromagnetischen Strahlung als Spektren der zweiten Generation und
Berechnen jeweils eines Maßes für eine Übereinstimmung eines jeden Spektrums der zweiten Generation mit jedem der Vergleichsspektren.

2. Verfahren nach Anspruch 1, **dadurch gekennzeichnet, dass** wenn das berechnete Maß für die Übereinstimmung eines erfassten Spektrums der zweiten oder n-ten Generation an einem Ort auf der Probe mit einem der Vergleichsspektren in einem vorgegebenen Bereich liegt, durch Ausführen der folgenden Schritte jeweils ein Maß für eine Übereinstimmung eines erfassten Spektrums einer dritten oder n+1-ten Generation mit einem der Vergleichsspektren generiert wird:
Bestimmen einer vorgegebenen Anzahl von Orten der dritten oder n+1-ten Generation, so dass alle Orte der dritten oder n+1-ten Generation auf der Probe voneinander und von den Orten aller anderen Generationen verschieden sind und alle Orte der dritten oder n+1-ten Generation auf der Probe in einem vorgegebenen Bereich um den Ort der zweiten oder n-ten Generation auf der Probe herum angeordnet sind,
Bestrahlen der Probe mit elektromagnetischer Strahlung mit der Mehrzahl von Frequenzen oder dem Frequenzband aus einem Frequenzbereich von 1 GHz bis 30 THz an den Orten der dritten oder n+1-ten Generation auf der Probe, frequenzaufgelöstes Erfassen jeweils eines Maßes für die Intensität der an den Orten der dritten oder n+1-ten Generation auf die Probe gestrahlten und durch die Probe transmittierten oder von der Probe reflektierten elektromagnetischen Strahlung als Spektren der dritten oder n+1-ten Generation und
Berechnen jeweils eines Maßes für eine Übereinstimmung eines jeden erfassten Spektrums der dritten oder n+1-ten Generation mit jedem der vorbestimmten Vergleichsspektren.

3. Verfahren nach Anspruch 1 oder 2, **dadurch gekennzeichnet, dass** die maximale Anzahl von Generationen von erfassten Spektren auf einen vorgegebenen Wert begrenzt ist.

4. Verfahren nach einem der vorhergehenden Ansprüche, **dadurch gekennzeichnet, dass** die vorgegebene Anzahl von Orten auf der Probe, an denen in einer Generation von Spektren Spektren erfasst werden, über die Generationen konstant ist oder mit zunehmender Ordnung der Generationen abnimmt.

5. Verfahren nach einem der vorhergehenden Ansprüche, **dadurch gekennzeichnet, dass** die Orte der n+1-ten Generation so bestimmt werden, dass jeder mit einem vorgegebenem Abstand und mit einer vorgegebenen Richtung von dem jeweiligen Ort der n-ten Generation angeordnet ist.

6. Verfahren nach einem der vorhergehenden Ansprüche, **dadurch gekennzeichnet, dass** die Orte der n+1-ten Generation auf der Probe mit folgenden Schritten in der angegebenen Reihenfolge bestimmt werden:
Definieren eines Bereichs um den Ort der n-ten Generation, vorzugsweise eines Kreises mit einem Radius r,
zufälliges Auswählen einer Anzahl von Orten in dem definierten Bereich, wobei die Anzahl von in diesem Schritt zufällig ausgewählten Orten größer ist als die vorgegebene Anzahl der zu bestimmenden Orte der n+1-ten Generation,
Bestimmen eines ersten Ortes der n+1-ten Generation aus der Menge der im vorhergehenden Schritt ausgewählten Orte,
Bestimmen eines weiteren Ortes der n+1-ten Generation aus der Menge der zuvor ausgewählten Orte in dem definierten Bereich, wobei derjenige Ort bestimmt wird, der einen maximalen Abstand von dem Ort der n-ten Generation und von allen zuvor bestimmten Orten aller Generationen in dem definierten Bereich aufweist,
Wiederholen des vorhergehenden Schrittes so lange, bis die vorbestimmte Anzahl von Orten der n+1-ten Generation bestimmt ist.

7. Verfahren nach einem der vorhergehenden Ansprüche, **dadurch gekennzeichnet, dass** dann, wenn für ein an einem Ort auf der Probe erfasstes Spektrum der n-ten Generation keine Wahrscheinlichkeit dafür, dass an diesem Ort auf der Probe eine chemische Substanz vorhanden ist, mit deren Vergleichsspektrum das erfasste Spektrum verglichen wurde, vorliegt, die größer ist als ein vorgegebener Schwellenwert, in der n-ten Generation ein weiteres Maß für eine Übereinstimmung eines erfassten Spektrums an einem weiteren Ort mit einem oder einer Mehrzahl von vorbestimmten Vergleichsspektren chemischer Substanzen generiert wird.

8. Verfahren nach Anspruch 7, **dadurch gekennzeichnet, dass** der weitere Ort der n-ten Generation auf der Probe mit folgenden Schritten in der angegebenen Reihenfolge bestimmt wird:
Definieren eines Bereichs um den Ort der n-1-ten Generation, vorzugsweise eines Kreises mit einem Radius r,
Auswählen eines Ortes in dem definierten Bereich, in dessen Umgebung eine minimale Dichte von Orten, an denen Spektren erfasst wurden, vorliegt, als dem weiteren Ort.

9. Verfahren nach einem der vorhergehenden Ansprüche, **dadurch gekennzeichnet, dass** dann wenn für ein an einem Ort auf der Probe erfasstes Spektrum der n-ten Generation keine Wahrscheinlichkeit dafür, dass an diesem Ort auf der Probe eine chemische Substanz vorhanden ist, mit deren Vergleichsspektrum das erfasste Spektrum verglichen wurde, vorliegt, die größer ist als ein vorgegebener Schwellenwert, das an diesem Ort erfasste Spektrum als Referenzspektrum für die anderen erfassten Spektren oder noch zu erfassenden Spektren verwendet wird und vorzugsweise von den anderen erfassten Spektren als Off-set abgezogen wird.

10. Verfahren nach einem der vorhergehenden Ansprüche, dass bei dem Bestimmen der Orte auf der Probe für eine Generation ein Gradient zwischen mindestens zwei an zwei verschiedenen Orten generierten Maßen für eine Übereinstimmung eines erfassten Spektrums mit mindestens einem der Vergleichsspektren, vorzugsweise allen Vergleichsspektren berücksichtigt werden.

11. Verfahren nach einem der vorhergehenden Ansprüche, **dadurch gekennzeichnet, dass** zum Bestimmen eines Orts oder einer Mehrzahl von Orten der ersten Generation auf der Probe ein Benutzer einen Bereich auf der oder um die Probe auswählt, innerhalb dessen eine zufällige Auswahl des Orts oder der Orte erfolgt.

12. Verfahren nach einem der vorhergehenden Ansprüche, **dadurch gekennzeichnet, dass** die Orte auf der Probe, für die ein Spektrum erfasst wurde, in einer schematischen Darstellung auf einem Bildschirm angezeigt werden.

13. Verfahren nach Anspruch 12, **dadurch gekennzeichnet, dass** die schematische Darstellung eine Abbildung der Probe umfasst, der die Orte auf der Probe, für die ein Spektrum erfasst wurde, grafisch überlagert sind.

14. Verfahren nach Anspruch 12 oder 13, **dadurch gekennzeichnet, dass** das Maß für eine Übereinstimmung eines erfassten Spektrums mit mindestens einem vorbestimmten Vergleichsspektrum farbkodiert an dem Ort in der schematischen Darstellung angezeigt wird.

15. Spektrometer (1) für die Spektrometrie an einer ausgedehnten Probe (12) mit
einer Quelle (3) für elektromagnetische Strahlung mit einer Mehrzahl von Frequenzen oder einem Frequenzband aus einem Frequenzbereich von 1 GHz bis 30 THz,
einem Detektor (4) zum frequenzaufgelösten Erfassen eines Maßes für die Intensität der unter einem Einfallswinkel auf die mehrlagige Struktur geleiteten und durch die mehrlagige Struktur transmittierten oder von der mehrlagigen Struktur reflektierten elektromagnetischen Strahlung als einem Spektrum,
einer Steuereinrichtung (11) und
einer Auswerteeinrichtung (11),
**dadurch gekennzeichnet, dass**
das Spektrometer (1) zum Ausführen eines Verfahrens nach einem der Ansprüche 1 bis 14 eingerichtet ist.
